# EUROPÄISCHE PATENTSCHRIFT

(11) **EP 1 437 543 B1**
(45) Veröffentlichungstag und Bekanntmachung des Hinweises auf die Patenterteilung: **11.07.2007**
(21) Anmeldenummer: 03027364.3
(22) Anmeldetag: 27.11.2003
(51) Int. Cl.: F17C 5/02, B67D 5/37, F16L 37/44

(54) **Schnellanschlusskupplung mit Betätigungseinrichtung für die Übertragung eines gasförmigen und /oder flüssigen Mediums**
Quick-connect coupling with actuating device for the transfer of a gaseous and/or liquid medium
Dispositif d'accouplement à raccord rapide avec dispositif de manoeuvre pour le transfert d'un milieu gazeux et/ou liquide

(30) Priorität: 18.12.2002 DE 10259627; 02.04.2003 DE 20305357 U
(43) Veröffentlichungstag der Anmeldung: 14.07.2004
(60) Teilanmeldung: 07010306.4
(73) Patentinhaber: Witt GmbH & Co. Holding und Handels-KG, 58454 Witten (DE)
(72) Erfinder: Lull, Hans-Jürgen, 58313 Herdecke (DE); Müller, Claus, 58454 Witten (DE); Weyland, Thorsten, 58239 Schwerte (DE)
(74) Vertreter: Isfort, Olaf

(56) Entgegenhaltungen:
- EP-A- 0 039 977
- EP-A- 1 006 310
- WO-A-00/52378
- FR-A- 2 686 680
- US-A- 4 540 021

## Beschreibung

Die Erfindung betrifft eine Schnellanschlusskupplung mit Betätigungseinrichtung für die Übertragung eines gasförmigen und/oder flüssigen Mediums, insbesondere Betankungsarmatur zum Füllen von Fahrzeug-Gastanks, mit einem langgestreckten Gehäuse mit Anschluss, welches in seinem Innern wenigstens eine auslassseitige Verriegelungseinrichtung, ein Auslassventil, eine Entlüftungseinrichtung und ein Einlassventil aufweist, und mit einem schwenkbar an das Gehäuse angelenkten Außenhebel zur Beaufschlagung der Verriegelungseinrichtung und des Einlassventils, wobei der Außenhebel als im Wesentlichen in Gehäuselängsebene bewegbarer Ziehgriff ausgebildet ist.

Eine solche Kupplung ist aus der FR 2 686 680 A1 bekannt.

Eine weitere, bekannte Schnellanchluusskupplung mit Betätigungseinrichtung wird beispielhaft in der DE 689 10 174 T2 behandelt. Hier dient eine Betätigungseinrichtung in Form eines Bedienungsgriffes dazu, das Einlassventil bzw. eine Einlassventileinrichtung und eine Entlüftungsventileinrichtung alternierend in eine geöffnete Stellung zu bewegen. Gleichzeitig sorgt die Betätigungseinrichtung für eine Verriegelung des Gehäuses mit einem Gegenanschluss. Diese Verriegelung ist erforderlich, weil das in den Fahrzeug-Gastank einzufüllende Gas unter hohem Druck steht (mehr als 100 bar) und folglich aus Gründen der Sicherheit die Schnellanschlusskupplung mit dem Gegenanschluss gekoppelt werden muss.

Um diese verschiedenen Funktionsstellungen zu erreichen, wird der Bediengriff bzw. Betätigungsgriff um insgesamt ca. 180° verschwenkt, und zwar quer zur Längsrichtung des Gehäuses. Das ist aufwendig und für einen Benutzer ungewohnt. Denn ein solcher Bewegungsablauf stellt sich völlig anders dar, als dies beim Betanken eines Kraftfahrzeuges mit flüssigen Brennstoffen vorgenommen wird.

Vor ähnlichen Problemen steht ein Bediener bei einer ebenfalls gattungsgemäßen Schnellanschlusskupplung, wie sie Gegenstand der WO 00/52378 A1 ist. Denn hier wird ein Schiebering mit Hilfe eines Handgriffes manuell in axialer Richtung verschoben, was nicht unerhebliche Bedienkräfte erfordert. - Hier will die Erfindung insgesamt Abhilfe schaffen.

Der Erfindung liegt das technische Problem zugrunde, eine Schnellanschlusskupplung mit Betätigungseinrichtung für die Übertragung eines gasförmigen und/oder flüssigen Mediums der eingangs beschriebenen Gestaltung so weiter zu entwickeln, dass eine intuitive und einfache Bedienung mit geringeren Kräften erreicht wird.

Diese technische Problemstellung ist durch eine Schnellanschlusskupplung gemäß den Merkmalen des Anspruchs 1 gelöst. Vorteilhafte Weiterbildungen der Erfindung sind in den abhängigen Ansprüchen definiert. Im Gegensatz zu der 689 10 174 T2 finden also Schwenkbewegungen des Außenhebels nicht quer zur Längsrichtung des Gehäuses statt, sondern - wenn man so will - in Gehäuselängsrichtung bzw. in der Gehäuselängsebene.

In diesem Zusammenhang sollte betont werden, dass die Gehäuselängsebene im Wesentlichen senkrecht zu einer Projektionsfläche des Gehäuses in senkrechter Aufsicht angeordnet ist. D. h., die Gehäuselängsebene steht nahezu senkrecht zu der sich aus der senkrechten Aufsicht auf das Gehäuse darstellenden Projektionsfläche. Dadurch, dass sich der Außenhebel erfindungsgemäß nun in der betreffenden Gehäuselängsebene bewegt, wird sichergestellt, dass der Außenhebel die Projektionsfläche bei seiner Betätigung nicht verlässt. Man könnte also auch sagen, dass der Außenhebel als sich (ausschließlich) und vollständig innerhalb einer senkrechten Projektionsfläche des Gehäuses bewegender Ziehgriff ausgebildet ist. Demgegenüber verlässt der quer bewegte Betätigungsgriff nach der DE 689 10 174 T2 augenscheinlich die besagte Projektionsfläche.

Dabei werden die für die Übertragung des Mediums erforderlichen Schritte, und zwar zunächst eine Verriegelung des Gehäuses bzw. der Schnellanschlusskupplung an einem Gegenanschluss, daran anschließend das Öffnen des Einlassventils, wobei zuvor eine Entlüftungseinrichtung geschlossen wurde, mit einer einzigen Ziehbewegung des Ziehgriffes von einer am freien Ende beabstandeten Position hin in unmittelbare Nähe des Gehäuses vollzogen. Das kommt einem Betankungsvorgang bei einer Zapfpistole mit flüssigen Kraftstoffen gleich, so dass die Bedienung im Vergleich zum Stand der Technik erleichtert ist und insbesondere ein Fahrzeugbenutzer nicht umdenken muss.

Der Außenhebel überstreicht bei seinen Schwenkbewegungen in der Gehäuselängsebene in der Regel einen vorgegebenen Schwenkwinkel gegenüber einer Gehäuselängsrichtung. Dieser Schwenkwinkel mag Werte annehmen, die denjenigen entsprechen, wie sie bei Zapfpistolen für flüssige Kraftstoffe eingesetzt werden, beispielsweise 0° bis 60°, vorzugsweise 0° bis 30°, in der Regel 0° bis 20°. Um nun mit Hilfe des Ziehgriffes die auslassseitige Verriegelungseinrichtung und das Einlassventil bzw. die Einlassventileinrichtung in der angegebenen Reihenfolge mit Hilfe des Ziehgriffes beaufschlagen zu können, verfügt der Außenhebel bzw. Ziehgriff über ein Getriebe, das in seinem Anlenkpunkt im Gehäuse an den betreffenden Griff oder Hebel angeschlossen ist. Dieses Getriebe wandelt seine Schwenkbewegungen in der Gehäuselängsebene in Linearbewegungen in im Wesentlichen in Gehäuselängsrichtung um.

Diese Linearbewegungen werden mittels zwei Linearstellelementen einerseits auf die Verriegelungseinrichtung und andererseits das Einlassventil übertragen. Zu diesem Zweck verfügt das Getriebe über eine oder mehrere Zahnstangen als Linearstellelement. Alternativ oder zusätzlich mögen eine oder mehrere Stellstangen als Linearstellelement realisiert sein, die mittels eines Exzenters beaufschlagt werden.

In der Regel kommen sowohl eine Zahnstange als auch ein Exzenter zum Einsatz, wobei das Getriebe über die Zahnstange auf das Einlassventil arbeitet, während das Getriebe mit Hilfe des Exzenters und der Stellstange auf die Verriegelungseinrichtung einwirkt.

Immer wird eine Schnellanschlusskupplung mit Betätigungseinrichtung für die Übertragung eines gasförmigen und/oder flüssigen Mediums zur Verfügung gestellt, bei welcher die Bedienung gleichsam derjenigen entspricht, als ob nicht ein Fahrzeug-Gastank mit Erdgas befüllt wird, sondern eine Zapfpistole zum Betanken mit flüssigem Kraftstoff zum Einsatz käme. Die Bedienabfolge, die Betätigung des Ziehgriffes usw. sind an die übereinstimmenden Erfordernisse angepasst. So wird man das Gehäuse in der Regel so gestalten, dass es von einer Hand umgriffen werden kann. Ebenso wird der Ziehgriff - wie bei einer normalen Zapfpistole - von einem Schutzbügel umrahmt, der zugleich einen Klinkenmechanismus trägt, wie nachfolgend noch näher beschrieben wird. Zusammen mit der Längsrichtung des Gehäuses liegt der Schutzbügel für den Außenhebel bzw. Ziehgriff in der Gehäuselängsebene respektive spannt diese auf.

Der Anschluss steht wie üblich mit einem Schlauch oder einer Rohrleitung in Verbindung, welche das zu übertragende Fluid zuführt. Dabei kann der Anschluss bzw. ein Anschlussadapter in Anpassung an das zu übertragende Fluid insbesondere an die jeweils gewünschten Zuführwinkel, Durchlassquerschnitte usw. gestaltet sein.

Das Einlassventil kann pneumatisch mittels des zu übertragenden Mediums bzw. Gases betätigt werden. Das Auslösen und Bewegen des Einlassventils erfolgt also pneumatisch, wobei an dieser Stelle das ohnehin unter Druck stehende und zu übertragende Medium für den Aufbau der entsprechenden pneumatischen Kräfte genutzt wird.

Bei diesem Medium handelt es sich in der Regel, aber nicht einschränkend um Gas, insbesondere Erdgas, welches beispielhaft einen Druck von mehr als 100 bar aufweist. Die pneumatische Druckbeaufschlagung des Einlassventils geschieht dabei zumeist in nur einer Richtung eines zugehörigen Ventilkolbens. Tatsächlich wird dieser Ventilkolben federunterstützt in seiner geschlossenen Position gehalten und nur durch den aufgebauten Druck des Pneumatikmediums, also größtenteils des zu übertragenden Gases, geöffnet.

Dadurch wird die Bedienung insgesamt bedeutend komfortabler als beim Stand der Technik eingerichtet. Denn die obligatorische Betätigungseinrichtung bzw. der an dieser Stelle realisierte Außenhebel muss nun nicht mehr das Einlassventil mechanisch öffnen, um für die Übertragung des Mediums sorgen zu müssen. Vielmehr macht sich die Erfindung die von dem zu übertragenden Medium ohnehin aufgebauten Druckkräfte im Sinne einer pneumatischen Betätigung des Einlassventils zunutze. Dadurch werden nicht nur die Betätigungskräfte verringert, sondern auch Betätigungswege gegenüber bisherigen Ausgestaltungen verkürzt, was insgesamt den Komfort deutlich steigert.

Allgemein sind für die Übertragung des betreffenden Mediums die nachfolgenden Schritte erforderlich. Zunächst erfolgt eine Verriegelung des Gehäuses bzw. der Schnellanschlusskupplung an dem Gegenanschluss, welchem üblicherweise ein Fahrzeug-Gastank zugeordnet ist. Daran anschließend wird das Einlassventil geöffnet. Zuvor mag eine Entlüftungseinrichtung geschlossen werden, die obligatorisch geöffnet ist und dafür sorgt, dass sich im Gehäuse bzw. der Schnellanschlusskupplung insgesamt keine schädlichen Überdrücke im unbenutzten Zustand aufbauen.

Die bereits angesprochene Betätigungseinrichtung bzw. der Außenhebel dient in der Regel zur wahlweisen Druckbeaufschlagung oder Entlüftung eines Pneumatikzylinders. Dieser Pneumatikzylinder betätigt das Einlassventil und verfügt größtenteils über einen Ringkolben, der an einer Kante des Kolbens bzw. Ventilkolbens des Einlassventils anliegt.

Steht der Pneumatikzylinder unter Druck, so wird das Einlassventil gegen die Federkraft geöffnet, damit das zu übertragende Medium von dem Anschluss über das Gehäuse und das Einlassventil zum Gegenanschluss und schließlich in den Fahrzeug-Gastank strömen kann. Der Druck in dem Pneumatikzylinder wird dabei - wie ausgeführt - von dem unter Druck stehenden und zu übertragenden Medium zur Verfügung gestellt.

Im Einzelnen arbeitet der Außenhebel auf ein Steuerventilmodul, welches seinerseits den Pneumatikzylinder und folglich den dort vorgesehenen Ringkolben beaufschlagt, welcher das Einlassventil bei unter Druck befindlichem Pneumatikzylinder öffnet. Gleichzeitig sorgt das Steuerventilmodul dafür, dass zum Schließen des Einlassventils der Pneumatikzylinder entlüftet wird. Dadurch fällt der Druck in dem Pneumatikzylinder weg, so dass das Einlassventil federunterstützt geschlossen wird, weil eine auf den Kolben im Einlassventil arbeitende Feder für eine entsprechende Schließbewegung sorgt. Gleichzeitig wird durch diese Bewegung des Ventilkolbens der Ringkolben des Pneumatikzylinders in seine Ausgangsstellung überführt.

Das Steuerventilmodul besitzt im Detail mit Hilfe des Außenhebels bzw. der Betätigungseinrichtung betätigbare Steuerventile. Dieser Steuerventile leiten einerseits das unter Druck stehende und zu übertragende Medium an den Pneumatikzylinder weiter und sorgen andererseits für eine Entlüftung des Pneumatikzylinders. Damit der Außenhebel auf das Steuerventilmodul arbeiten kann, verfügt dieses über eine an den Außenhebel angeschlossene Betätigungswippe zur wechselweisen Beaufschlagung der beiden bereits beschriebenen Steuerventile. Dabei ist ein Steuerventil als Druckventil ausgeführt, während das andere Steuerventil die Funktion eines Entlüftungsventils übernimmt. Wenn sich das Druckventil in Offenstellung befindet, ist das Entlüftungsventil geschlossen und umgekehrt. Dafür sorgt die Betätigungswippe in Gestalt zumeist eines Kipphebels, der von dem Außenhebel entsprechend beaufschlagt wird.

Die Betätigungswippe nimmt größtenteils eine federbeaufschlagte Grundstellung ein, in welcher der Pneumatikzylinder entlüftet und folglich das Einlassventil geschlossen ist. Diese Grundstellung der Betätigungswippe korrespondiert dazu, dass das Druckventil geschlossen und das Entlüftungsventil geöffnet ist. Dadurch, dass Druckventil und Entlüftungsventil über einen gemeinsamen Kanal an den Pneumatikzylinder angeschlossen sind, führt diese Stellung der Steuerventile dazu, dass auch der Pneumatikzylinder entlüftet ist. Folgerichtig befindet sich der Ringkolben in seiner Ausgangsstellung und ist das Einlassventil geschlossen, weil insofern die dem Ventilkolben des Einlassventils zugeordnete obligatorische Feder hierfür sorgt.

Die Betätigungswippe ist in der Regel nicht nur als Kipphebel ausgebildet, sondern verfügt zudem über einen Ausleger zum Zusammenwirken mit dem Außenhebel. An diesem Ausleger greift auch eine Feder an, welche dafür sorgt, dass sich die Betätigungswippe in von dem Außenhebel unbeaufschlagter Stellung in der Position befindet, dass das Entlüftungsventil geöffnet und das Druckventil mit den bereits beschriebenen Folgen (Einlassventil zu) geschlossen ist.

Bei dem Außenhebel handelt es sich um den in Gehäuselängsebene bewegbaren Ziehgriff. Von besonderer Bedeutung ist hierbei die Tatsache, dass der Außenhebel erst nach einem vorgegebenen Betätigungsweg auf die Betätigungswippe und folglich das Steuerventilmodul arbeitet und dementsprechend erst dann das Einlassventil geöffnet werden kann. Zuvor, das heißt bevor dieser vorgegebene Betätigungsweg überstrichen worden ist, beaufschlagt der Außenhebel die auslassseitige Verriegelungseinrichtung.

Dadurch wird die zuvor angegebene Abfolge automatisch eingestellt, nämlich zunächst eine Verriegelung des Gehäuses bzw. der Schnellanschlusskupplung an dem Gegenanschluss mit Hilfe der auslassseitigen Verriegelungseinrichtung und erst im Anschluss das Öffnen des Einlassventils. Dazu verfügt die auslassseitige Verriegelungseinrichtung im Detail über eine Schiebehülse mit angeschlossener Betätigungsstange. Diese Betätigungsstange wird von einem mit dem Außenhebel zusammenwirkenden Betätigungshebel verschoben, um für die Festlegung des Gehäuses am Gegenanschluss zu sorgen.

Die Verriegelungseinrichtung mag über Sperrglieder verfügen, welche bei in das Gehäuse eingestecktem Gegenanschluss mit Hilfe der Schiebehülse aus einer Neutralstellung verriegelnd in eine Nut des Gegenanschlusses überführt werden. Wenn also die Schiebehülse den betreffenden Betätigungsweg überstrichen hat, sorgen die Sperrglieder für die beschriebene Verriegelung des Gehäuses am Gegenanschluss. Dieser Verschiebeweg der Schiebehülse korrespondiert dazu, dass die Schiebehülse regelmäßig gegen einen Anschlag fährt. Das führt dann automatisch dazu, dass auch die drehgelenkig an die Schiebehülse angeschlossene Betätigungsstange durch diesen Anschlag blockiert wird.

Als Folge hiervon wird eine kraftschlüssige Verbindung zwischen dem Außenhebel und dem Betätigungshebel unterbrochen. Das alles geschieht, nachdem der vorgegebene Betätigungsweg des Außenhebels überstrichen worden ist, wobei gleichzeitig der Verstellweg bzw. Betätigungsweg der Schiebehülse beendet ist, weil diese an dem Anschlag anliegt. Die damit verbundene Blockade der Betätigungsstange führt nun dazu, dass die kraftschlüssige Verbindung zwischen Außenhebel und Betätigungshebel unterbrochen bzw. aufgebrochen wird. Die fortschreitende Bewegung des Außenhebels bewirkt im Anschluss daran, dass jetzt die Betätigungswippe und folglich die Steuerventile in dem Steuerventilmodul beaufschlagt werden, so dass darauffolgend das Einlassventil eine Öffnung erfährt.

Im Ergebnis wird eine Schnellanschlusskupplung zur Verfügung gestellt, die sich zunächst einmal durch eine besonders komfortable Betätigung des Einlassventils auszeichnet.

Das wird durch seine pneumatische Auslösung erreicht, wobei der erforderliche pneumatische Arbeitsdruck von dem ohnehin unter Druck stehenden und zu übertragenden Medium zur Verfügung gestellt wird.

Hinzu kommt, dass eine einfache mechanische Verriegelung des Gehäuses der Schnellanschlusskupplung an dem Gegenanschluss gelingt. In diesem Zusammenhang sorgt die Betätigungseinrichtung bzw. der Außenhebel in einem ersten Schritt bzw. beim Überstreichen eines vorgegebenen ersten Betätigungsweges dafür, dass die Schiebehülse Sperrglieder verriegelnd in eine Nut des Gegenanschlusses überführt. Wenn dieser Vorgang abgeschlossen ist und folglich die Schiebehülse gegen einen Anschlag angelaufen ist, wird die zuvor kraftschlüssige Verbindung des Außenhebels zum Betätigungshebel und folglich der Schiebehülse unterbrochen, so dass eine daran anschließende fortschreitende zweite Bewegung des Außenhebels nun in das Öffnen des Einlassventils umgesetzt wird.

Dazu betätigt der Außenhebel den Ausleger an der Betätigungswippe, so dass das Druckventil in dem Steuerventilmodul geöffnet und das Entlüftungsventil geschlossen wird. Das geöffnete Druckventil sorgt nun dafür, dass das hieran anstehende und unter Druck befindliche sowie und zu übertragene Medium über den gemeinsamen Kanal in den Pneumatikzylinder gelangt und dort den Ringkolben durch den sich im Pneumatikzylinder aufbauenden Druck verschiebt. Auf diese Weise geht der Kolben des Einlassventils gegen die Kraft der Feder in seine öffnende Position über. Hierin sind die wesentlichen Vorteile zu sehen.

Im Folgenden wird die Erfindung anhand einer lediglich ein Ausführungsbeispiel darstellenden Zeichnung näher erläutert; es zeigen:

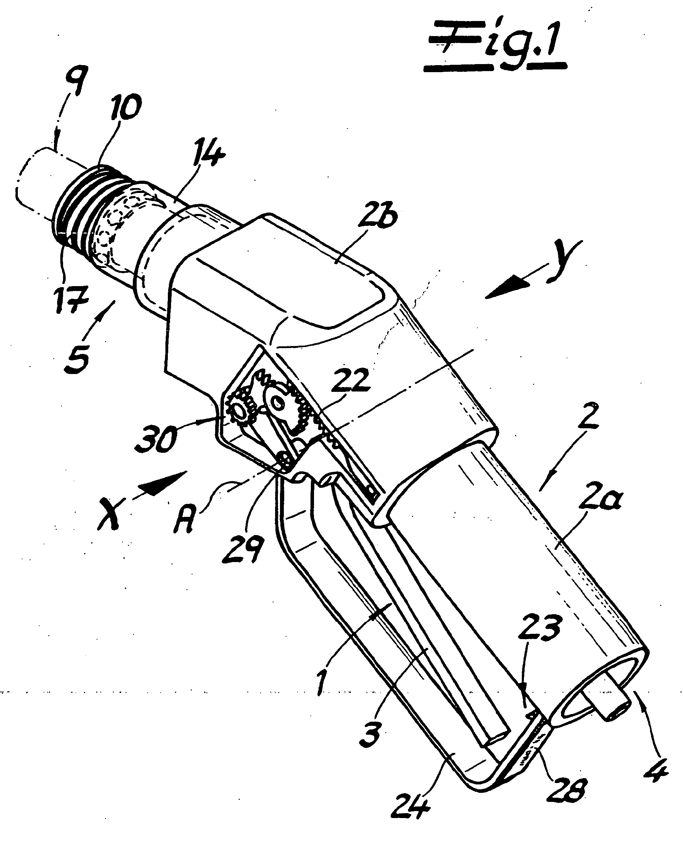

- Fig. 1: die Schnellanschlusskupplung mit Betätigungseinrichtung schematisch,
- Fig. 2: den Gegenstand nach Fig. 1 im Längsschnitt,
- Fig. 3: einen vergrößerten Ausschnitt aus Fig. 2 im Bereich des Gegenanschlusses mit anderer Funktionsstellung im Ausschnitt B,
- Fig. 4: eine Vergrößerung aus Fig. 2 im Bereich des Einlassventils,
- Fig. 5: eine Ansicht auf das Getriebe aus Richtung X gemäß Fig. 1 und
- Fig. 6: eine Ansicht auf das Getriebe aus Richtung Y entsprechend Fig. 1,
- Fig. 7: die Schnellanschlusskupplung in einer anderen, nicht im Rahmen der Erfindung liegenden Variante,
- Fig. 8: den Gegenstand nach Fig. 7 aus einer anderen Ansicht,
- Fig. 9: einen Ausschnitt aus den Fig. 7 und 8 im Bereich des Einlassventils,
- Fig. 10: das Steuerventilmodul im Detail,
- Fig. 11: den Gegenstand nach Fig. 10 im Schnitt und
- Fig. 12: eine teilweise Ansicht auf den Gegenstand nach den Fig. 7 und 8 von unten, und zwar aus Richtung X.

In den Fig. ist eine Schnellanschlusskupplung mit Betätigungseinrichtung 1 für die Übertragung eines gasförmigen und/oder flüssigen Mediums dargestellt. Im Rahmen des Ausführungsbeispiels handelt es sich um eine Betankungsarmatur, welche zum Füllen eines nicht dargestellten Fahrzeug-Gastanks mit Erdgas aus einem Vorratsbehälter bzw. Reservoir geeignet ist bzw. dient.

Die Schnellanschlusskupplung verfügt über ein langgestrecktes Gehäuse 2, welches sich in einen zylindrischen Abschnitt 2a und einen abgeknickt quaderförmigen Abschnitt 2b unterteilt. Der zylindrische Abschnitt 2a des Gehäuses 2 lässt sich problemlos von der Hand eines Bedieners umgreifen und ist an diese ergonomischen Anforderungen von seinen Abmessungen her angepasst. Gleiches gilt für die Betätigungseinrichtung 1, welche einen schwenkbar an das Gehäuse 2 angelenkten Außenhebel 3 aufweist, der als Ziehgriff 3 ausgebildet ist.

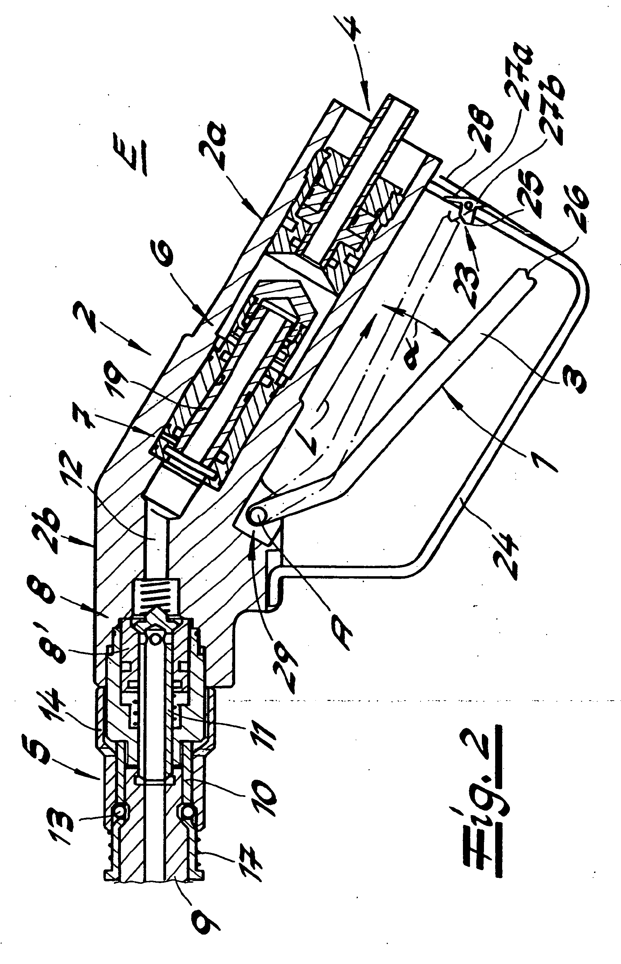

Der Ziehgriff 3 lässt sich im Rahmen des Ausführungsbeispiels ausschließlich in einer Gehäuselängsebene E um seine hierzu senkrechte Achse A bewegen. Die Gehäuselängsebene E fällt mit der Zeichenebene in der Fig. 2 zusammen. Wie einleitend bereits ausgeführt, steht die Gehäuselängsebene E im Wesentlichen senkrecht auf einer Projektionsfläche des Gehäuses 2, und zwar in senkrechter Aufsicht. Der Außenhebel 3 vermag sich nur in der betreffenden Projektionsfläche zu bewegen.

Zugehörige Schwenkbewegungen des Außenhebels 3 in der Gehäuselängsebene E sind durch einen korrespondierenden Schwenkwinkel α angedeutet, welcher sich gegenüber einer Gehäuselängsrichtung L einstellt. Im Rahmen des Ausführungsbeispiels mag α Werte von 0° bis 20° oder 30° annehmen, wobei bevorzugt Werte bis maximal 10° vorliegen.

Wenn man nun die Fig. 2 betrachtet, so erkennt man, dass das Gehäuse 2 zunächst einmal über einen Anschluss 4 bzw. einen Anschlussadapter 4 verfügt, über welchen mit Hilfe eines Schlauches oder eines Rohres das zu übertragende Medium von dem Reservoir zu der Schnellanschlusskupplung zugeführt wird. Innerhalb des Gehäuses 2 sind wenigstens eine auslassseitige Verriegelungseinrichtung 5 und ein Einlassventil 6 realisiert. Daneben finden sich eine Entlüftungseinrichtung 7 und schließlich ein Auslassventil 8, deren Funktionsweise nachfolgend erläutert wird.

Die Verriegelungseinrichtung 5 dient dazu, einen Gegenanschluss 9 in seiner in das Gehäuse 2 eingesteckten Stellung hierin festzulegen. Mit Hilfe der Entlüftungseinrichtung 7 wird gegebenenfalls beim Befüllen freigekommenes Gas oder Medium aus dem Gehäuse 2 entweder nach außen abgeleitet oder mit Hilfe einer nicht ausdrücklich dargestellten Sammelleitung in den Vorratsbehälter zurückgeführt.

Sobald die Schnellanschlusskupplung mit dem Gegenanschluss 9 verriegelt ist und das Einlassventil 6 das Medium zuführt, öffnet sich das Auslassventil 8, so dass die Übertragung des gasförmigen Mediums vom Reservoir über den Anschluss 4 durch das Gehäuse 2 und den Gegenanschluss 9 schließlich in den nicht dargestellten Fahrzeug-Gastank vollzogen werden kann. Grundsätzlich ist es auch möglich, dass zunächst das Auslassventil 8 bei verriegeltem Gegenanschluss 9 geöffnet wird und erst im Anschluss daran das Einlassventil 6 eine Freigabe erfährt.

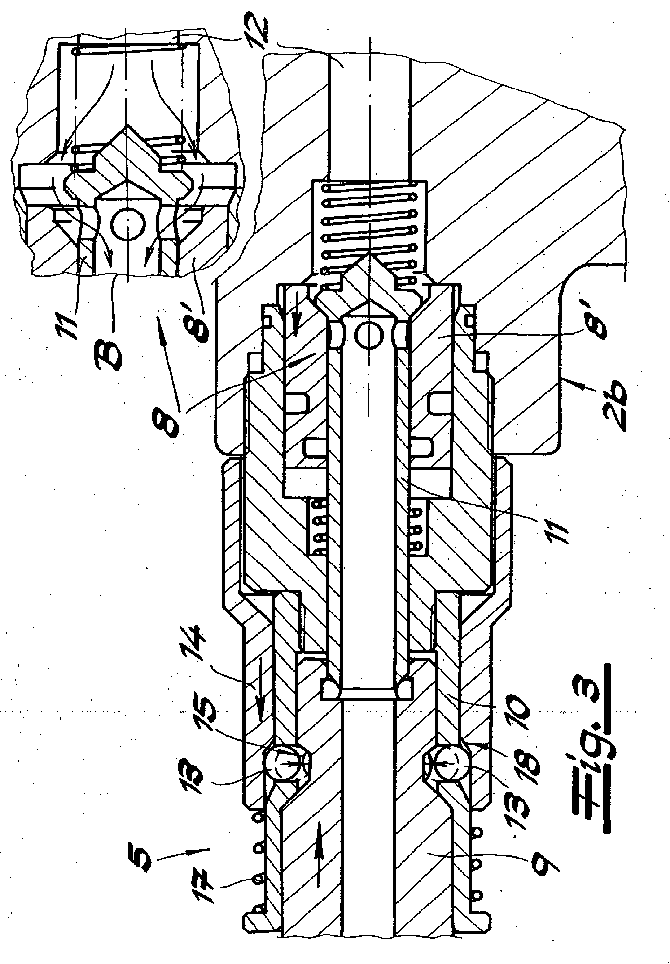

Als Erstes wird nun die Verriegelung der Schnellanschlusskupplung an dem Gegenanschluss 9 beschrieben. Das geschieht dergestalt, dass der Gegenanschluss 9 zunächst in das Gehäuse 2 bzw. eine in dem Gehäuse 2 verankerte Traghülse 10 eingesteckt wird, wie ein Pfeil in Fig. 3 deutlich macht. Dieser Einsteckvorgang führt dazu, dass ein Kolben 11 an eine Verbindungsleitung 12 zwischen dem Auslassventil 8 und dem Einlassventil 6 angelegt wird. Bei geöffnetem Einlassventil 6 strömt das gasförmige Medium über die Verbindungsleitung 12 zunächst gegen eine Ventilhülse 8' des Auslassventils 8, wodurch diese in der Fig. 2 nach links gegen Federkraft verschoben wird. Aufgrund des bei geöffnetem Einlassventil 6 an der Ventilhülse 8' anstehenden Druckes wird das Auslassventil 8 insgesamt geöffnet, so dass das gasförmige Medium über die Verbindungsleitung 12 durch den Kolben 11 schließlich in den Gegenanschluss 9 und folglich den Fahrzeug-Gastank gelangen kann (vgl. den vergrößerten Ausschnitt B in der Fig. 3).

Um den Gegenanschluss 9 im Gehäuse 2 zu verriegeln, verfügt die Verriegelungseinrichtung 5 über Sperrglieder 13, welche bei vollständig in das Gehäuse 2 eingestecktem Gegenanschluss 9 mit Hilfe einer Schiebehülse 14 aus der in Fig. 3 dargestellten Neutralstellung verriegelnd in eine Nut 15 des Gegenanschlusses 9 überführt werden. Das ist in Fig. 3 gestrichelt gezeigt.

Um diese Linearverschiebung der Schiebehülse 14 entgegen der Einstreckrichtung für den Gegenanschluss 9 vollziehen zu können, ist die Schiebehülse 14 über ein Linearstellelement 16 an die Betätigungseinrichtung 1 bzw. den Ziehgriff respektive Außenhebel 3 angeschlossen, wie nachfolgend noch näher erläutert wird. Jedenfalls führt die beschriebene Linearverschiebung der Schiebehülse 14 dazu, dass eine die Traghülse 10 umschließende Feder 17 komprimiert wird. Bei diesem Vorgang muss die Betätigungseinrichtung 1 bzw. der Ziehgriff 3 also die Vorspannung der Feder 17 überwinden.

Eine Auflauframpe 18 der Schiebehülse 14 sorgt dafür, dass die als Kugeln ausgebildeten Sperrglieder 13 in die Nut 15 in dem Gegenanschluss 9 eintauchen. In der Endstellung der Schiebehülse 14 werden die Sperrglieder 13 in der betreffenden Nut 15 vollständig versenkt und halten den Gegenanschluss 9 im Gehäuse 2 fest. - Grundsätzlich mag als Verriegelungseinrichtung 5 auch eine solche zum Einsatz kommen, die anstelle von als Kugeln ausgebildeten Sperrgliedern 13 Spannhülsen bzw. Spannzangen einsetzt, die mit Hilfe einer hieran angepassten Schiebehülse 14 verriegelt werden. Das heißt, die dargestellte Schnellanschlusskupplung mag grundsätzlich über eine Verriegelungseinrichtung 5 verfügen, wie sie in der DE 689 10 174 T2 bzw. der WO 00/52378 A1 beschrieben wird.

Nachdem der Gegenanschluss 9 im Gehäuse 2 verriegelt worden ist, wird zunächst die Entlüftungseinrichtung 7 geschlossen und im Anschluss daran das Einlassventil 6 geöffnet, wobei sich hieran die Öffnung des Auslassventils 8 anschließt. Grundsätzlich ist die Entlüftungseinrichtung 7 permanent geöffnet und wird erst unmittelbar vor Öffnen des Einlassventils 6 geschlossen.

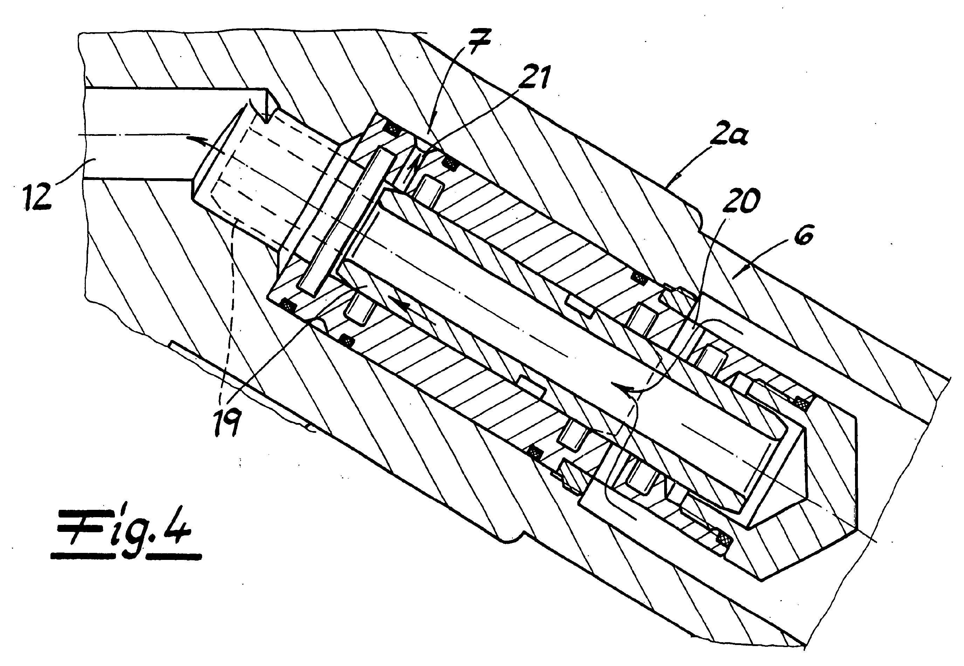

Zu diesem Zweck verfügt das Einlassventil 6 ausweislich der Fig. 4 über einen beidseitig offenen Hohlkörper 19, der als beidseitig offener Hohlzylinder ausgebildet ist. Der Hohlkörper bzw. Hohlzylinder 19 verschließt bei geschlossenem Einlassventil (durchgezogene Position nach Fig. 4) eine Einlassbohrung 20, an welcher der Druck des zu übertragenden Mediums ansteht. In dieser Stellung ist eine Entlüftungsbohrung 21 in der Lage, gegebenenfalls vorhandenes überschüssiges Gas oder Medium in den Vorratsbehälter zurückzuführen. Dieses Gas kann das Innere des Hohlkörpers 19 über die betreffende Entlüftungsbohrung 21 verlassen.

Um nun das Einlassventil 6 zu öffnen und davor die Entlüftungsbohrung 21 zu verschließen bzw. die Entlüftungseinrichtung 7 zu schließen, ist es erforderlich, den Hohlkörper bzw. Hohlzylinder 19 in der Pfeilrichtung nach Fig. 4 linear zu verstellen. Diese Axialverstellung führt dazu, dass zunächst die Entlüftungsbohrung 21 von dem fortschreitenden Hohlzylinder 19 verschlossen wird und im Anschluss daran die Einlassbohrung 20 freikommt, wie die gestrichelte Darstellung in Fig. 4 deutlich macht. In dieser Position bei geschlossener Entlüftungseinrichtung 7 und geöffnetem Einlassventil 6 ist das Gas in der Lage, über die Einlassöffnung 20 durch den Hohlzylinder 19 hindurch in die Verbindungsleitung 12 eintreten zu können, von wo aus es über das geöffnete Auslassventil 8 und den Gegenanschluss 9 schließlich in den Gastank gelangt.

Der Hohlkörper bzw. Hohlzylinder 9 ist ebenfalls über ein Linearstellelement, und zwar ein weiteres Linearstellelement 22 an die Betätigungseinrichtung 1 bzw. den Ziehgriff 3 angeschlossen. Das wird weiter unten noch näher erläutert.

Eine Klinke 23, welche an einem Schutzbügel 24 für den Ziehgriff 3 angebracht ist, sorgt dafür, dass der Ziehgriff 3 in einer bestimmten Stellung festgehalten wird. Zu diesem Zweck verfügt die Klinke 23 über eine Nase 25, welche in dieser Position in eine Einkerbung 26 am Außenhebel bzw. Ziehgriff 3 eingreift. Der Schutzbügel 24 spannt zusammen mit der Gehäuselängsrichtung L die Gehäuselängsebene E auf bzw. liegt hierin.

Die Klinke 23 verfügt über zwei rückseitige Anlageflächen 27a, 27b, die mit einer Blattfeder 28 zusammenwirken. In Neutralstellung der Klinke 23 liegt die Blattfeder 28 an der Anlagefläche 27b an. Wenn jedoch der Ziehgriff 3 einen bestimmten Schwenkwinkel α überstrichen hat, blockiert die Klinke 23 mit ihrer Nase 25 den Ziehgriff 3, indem die Nase 25 in die Einkerbung 26 einfällt. Dann liegt die Anlagefläche 27a an der Blattfeder 28 an, die ihrerseits an den Schutzbügel 24 angeschlossen ist. In dieser Stellung des Ziehgriffes 3 sind das Auslassventil 8 und das Einlassventil 6 geöffnet und im Übrigen die Entlüftungseinrichtung 7 geschlossen, so dass die Übertragung des Mediums von dem Vorratsbehälter in den Gastank vollzogen wird. Ebenso ist in dieser Position der Gegenanschluss 9 in dem Gehäuse 2 verriegelt.

Um nun diesen Vorgang zu beenden, bzw. die Klinke 23 zu lösen, muss der Außenhebel bzw. Ziehgriff 3 über die in der Fig. 2 strichpunktiert dargestellte Stellung hinaus in Richtung auf das Gehäuse 2 angezogen werden, so dass die Nase 25 aus der Einkerbung 26 - unterstützt von der Blattfeder 28 - ausschwenkt. Im Anschluss hieran kann der Ziehgriff 3 in seine Ruheposition federunterstützt zurückkehren. Das hat zur Folge, dass zunächst das Einlassventil 6 geschlossen wird, wobei daran anschließend die Entlüftungseinrichtung 7 erneut eine Öffnung erfährt. Dadurch sinkt der Druck innerhalb des Gehäuses 2 bzw. der Verbindungsleitung 12 zum Auslassventil 8, so dass dieses federunterstützt schließt. Abschließend wird das Gehäuse 2 von dem Gegenanschluss 9 abgezogen.

Die Linearbewegungen von einerseits dem Hohlkörper bzw. Hohlzylinder 19 und andererseits der Schiebehülse 14 der Verriegelungseinrichtung 5 werden - wie bereits beschrieben - jeweils von dem Betätigungshebel bzw. Ziehgriff 3 ausgelöst. Zu diesem Zweck verfügt der Außenhebel bzw. Ziehgriff 3 in seinem Anlenkpunkt 29 über ein dort angeschlossenes Getriebe 30. Dieses Getriebe 30 wandelt die Schwenkbewegungen des Außenhebels bzw. Ziehgriffes 3 in der Gehäuselängsebene E in Linearbewegungen einerseits des Linearstellelementes 22 und andererseits des Linearstellelementes 16 um, die im Wesentlichen in Gehäuselängsrichtung L vollführt werden.

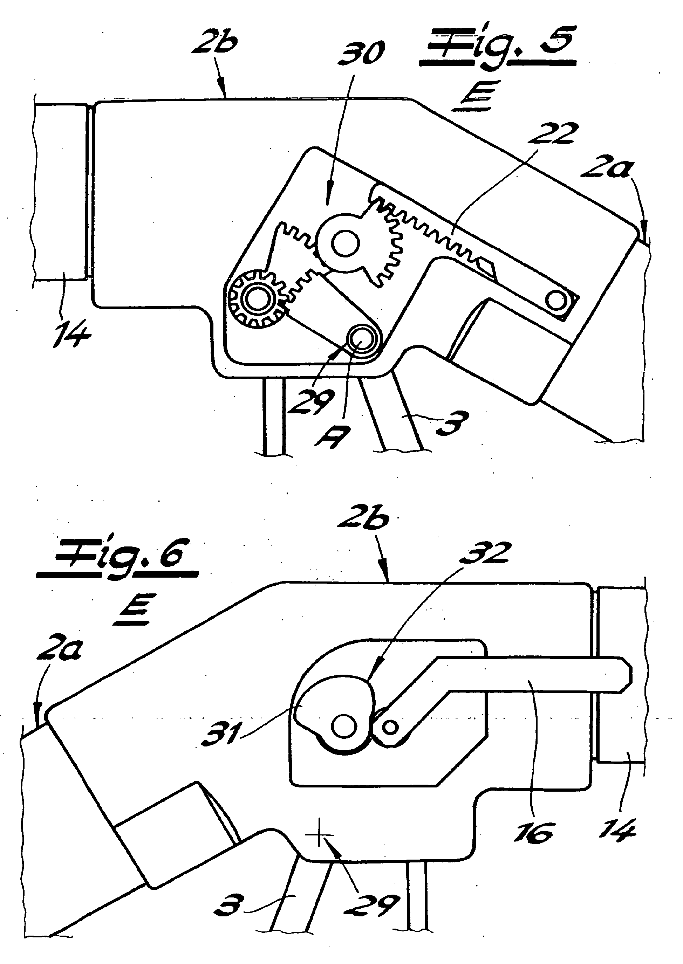

Dazu besitzt das Getriebe 30 ausweislich der Fig. 5 mehrere ineinandergreifende Zahnräder, welche die Schwenkbewegungen des Ziehgriffes 3 in eine Linearbewegung des als Zahnstange 22 ausgeführten Stellelementes 22 umwandeln.

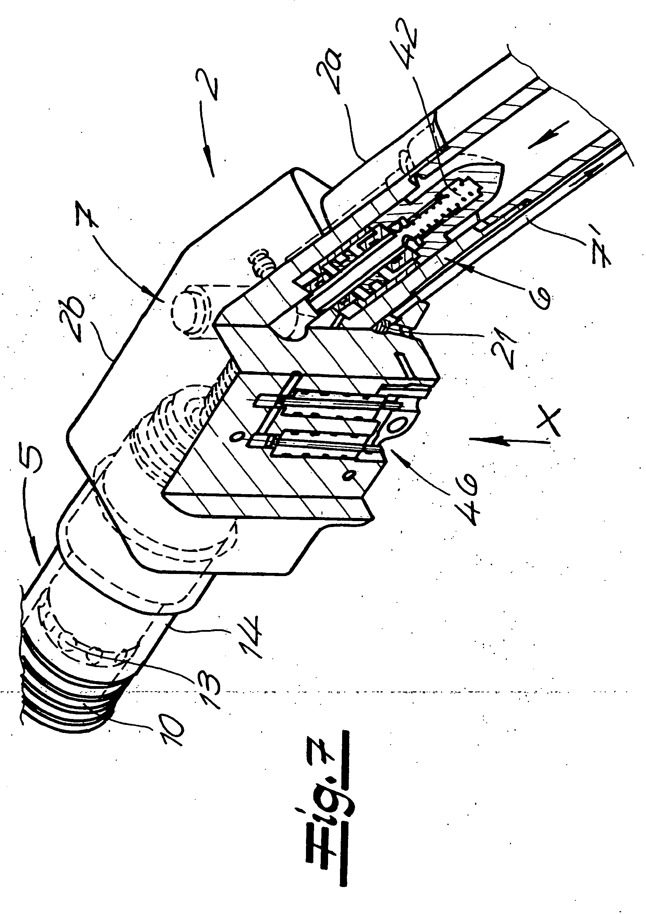

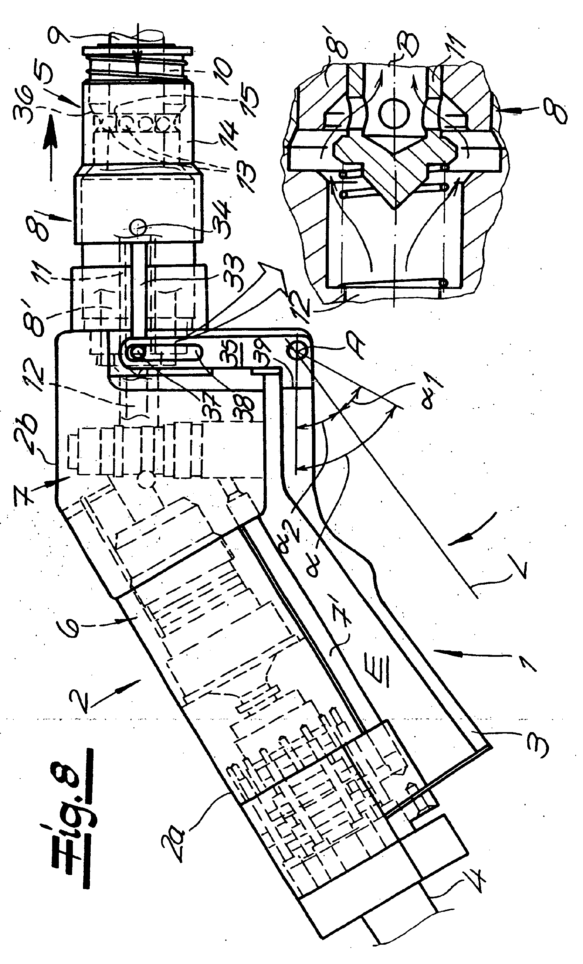

Oberhalb des Anlenkpunktes 29 ist auch ein Exzenter 31 an den Ziehgriff 3 bzw. das Getriebe 30 angeschlossen, wobei der Exzenter 31 auf ein als Stellstange 16 ausgebildetes Linearstellelement 16 arbeitet. (Vgl. Fig. 5 und 6). Die Stellstange 16 ist an die Schiebehülse 14 zu deren Axialverschiebung angeschlossen. Der Exzenter 31 sorgt mit seiner steilen Anfangsflanke 32 dafür, dass zu Beginn der Ziehbewegung des Außenbetätigungshebels bzw. Ziehgriffes 3 die Verriegelungseinrichtung 5 unmittelbar geschlossen wird. Erst im Anschluss daran führt eine fortschreitende Linearverstellung der Zahnstange 22 dazu, dass zunächst die Entlüftungseinrichtung 7 eine Schließung erfährt und daran anschließend das Einlassventil 6 geöffnet wird.

In Folge des durch das geöffnete Einlassventil 6 am Auslassventil 8 anstehenden Druckes wird das Auslassventil 8 geöffnet und gibt die Verbindung vom Reservoir zum Fahrzeug-Gastank frei.

Beim Loslassen des Ziehgriffs 3 erfolgt die umgekehrte Funktionsabfolge. Zunächst wird das Einlassventil 6 aufgrund der sich in Gegenrichtung bewegenden Zahnstange 22 geschlossen. Danach erfährt die Entlüftungseinrichtung 7 eine Öffnung. Dadurch fällt der Druck des Mediums weg, so dass sich das Auslassventil 8 schließt. Schließlich wird die Verriegelungseinrichtung 5 entriegelt. Denn der Exzenter 32 hat seine Ausgangsstellung erreicht und die Stellstange 16 bzw. die daran angeschlossene Schiebehülse 14 gibt die Sperrglieder 13 frei. Jetzt kann die Betankungsarmatur von dem Gegenanschluss 9 abgezogen werden.

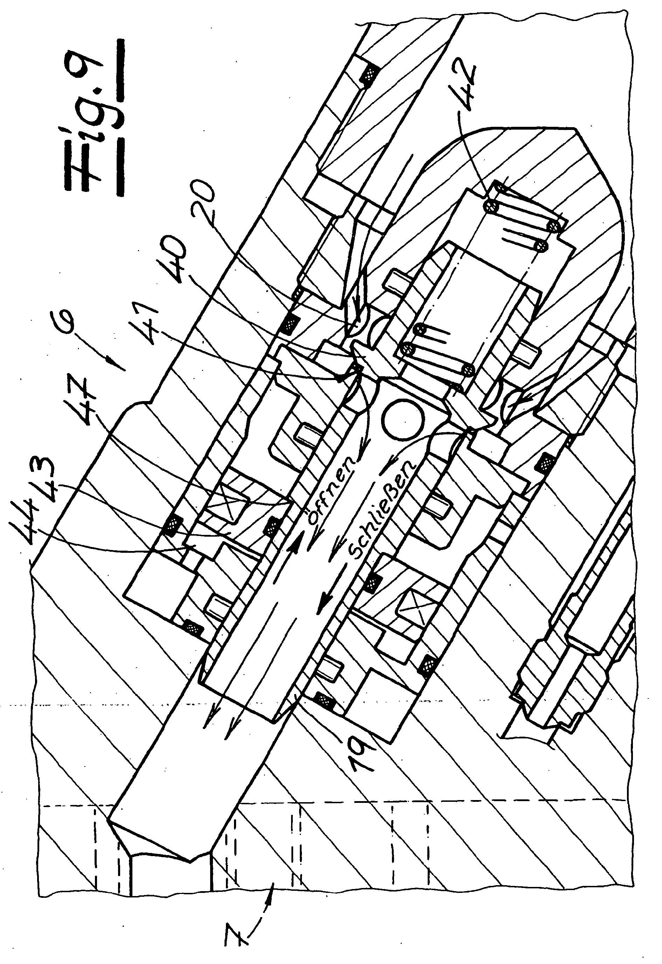

Bei der nicht im Rahmen der Erfindung liegenden Variante nach den Fig. 7 ff sind gleiche Bauteile mit übereinstimmenden Bezugszeichen versehen. Im Rahmen der Darstellung nach den Fig. ff. mag der Schwenkwinkel α Werte von 0° bis ca. 40° annehmen. Wie nachfolgend noch erläutert wird, setzt sich der zum Schwenkwinkel α korrespondierende Betätigungsweg des Außenhebels 3 aus einem ersten und einem zweiten Betätigungsweg zusammen. Dazu gehören die Winkel α₁ und α₂.

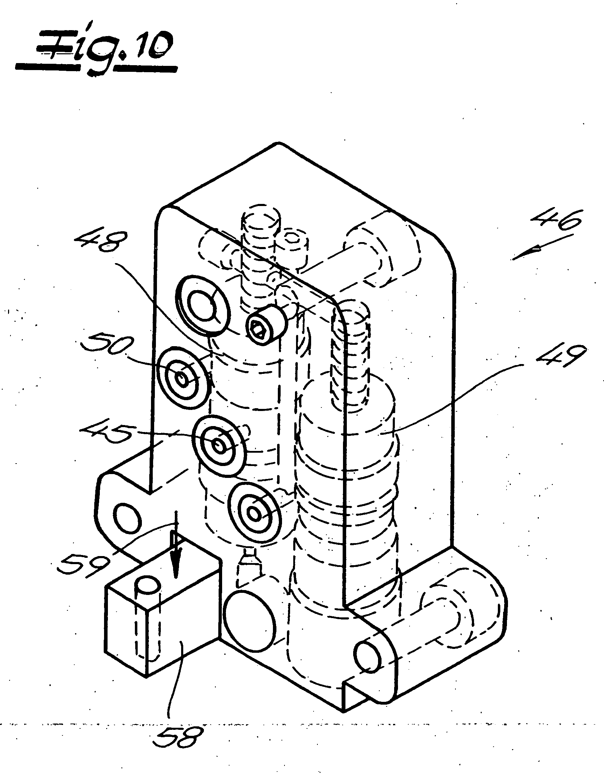

Wenn man nun die Fig. 8 betrachtet, so erkennt man, dass das Gehäuse 2 wiederum über den Anschluss 4 bzw. einen Anschlussadapter 4 verfügt, über welchen mit Hilfe eines Schlauches oder eines Rohres das zu übertragende Medium von dem Reservoir zu der Schnellanschlusskupplung zugeführt wird. Innerhalb des Gehäuses 2 sind wenigstens die auslassseitige Verriegelungseinrichtung 5 und das Einlassventil 6 realisiert. Daneben finden sich die Entlüftungseinrichtung 7 mit Sammelleitung 7' (vgl. Fig. 7) und schließlich das Auslassventil 8, deren jeweilige Funktionsweise nachfolgend erläutert wird.

Die Verriegelungseinrichtung 5 dient dazu, den Gegenanschluss 9 in seiner in das Gehäuse 2 eingesteckten Stellung hierin festzulegen. Mit Hilfe der Entlüftungseinrichtung 7 wird gegebenenfalls beim Befüllen freigekommenes Gas oder Medium aus dem Gehäuse 2 entweder nach außen abgeleitet oder mit Hilfe der dargestellten Sammelleitung 7' in den Vorratsbehälter zurückgeführt.

Sobald die Schnellanschlusskupplung mit dem Gegenanschluss 9 verriegelt ist und das Einlassventil 6 das Medium zuführt, öffnet sich das Auslassventil 8, so dass die Übertragung des gasförmigen Mediums vom Reservoir über den Anschluss 4 durch das Gehäuse 2 und den Gegenanschluss 9 schließlich in den nicht dargestellten Fahrzeug-Gastank vollzogen werden kann. Grundsätzlich ist es auch möglich, dass zunächst das Auslassventil 8 bei verriegeltem Gegenanschluss 9 geöffnet wird und erst im Anschluss daran das Einlassventil 6 eine Freigabe erfährt.

Als Erstes wird nun die Verriegelung der Schnellanschlusskupplung an dem Gegenanschluss 9 beschrieben. Das geschieht dergestalt, dass der Gegenanschluss 9 zunächst in das Gehäuse 2 bzw. die in dem Gehäuse 2 verankerte Traghülse 10 eingesteckt wird, wie ein Pfeil in Fig. 8 deutlich macht. Dieser Einsteckvorgang führt dazu, dass der Kolben 11 an die Verbindungsleitung 12 zwischen dem Auslassventil 8 und dem Einlassventil 6 angelegt wird. Bei geöffnetem Einlassventil 6 strömt das gasförmige Medium über die Verbindungsleitung 12 zunächst gegen die Ventilhülse 8' des Auslassventils 8, wodurch diese in der Fig. 8 nach rechts gegen Federkraft verschoben wird. Aufgrund des bei geöffnetem Einlassventil 6 an der Ventilhülse 8' anstehenden Druckes wird das Auslassventil 8 insgesamt geöffnet, so dass das gasförmige Medium über die Verbindungsleitung 12 durch den Kolben 11 schließlich in den Gegenanschluss 9 und folglich den Fahrzeug-Gastank gelangen kann (vgl. den vergrößerten Ausschnitt B in der Fig. 8).

Um den Gegenanschluss 9 im Gehäuse 2 zu verriegeln, verfügt die Verriegelungseinrichtung 5 über die Sperrglieder 13, welche bei vollständig in das Gehäuse 2 eingestecktem Gegenanschluss 9 mit Hilfe der Schiebehülse 14 aus einer Neutralstellung verriegelnd in eine Nut 15 des Gegenanschlusses 9 überführt werden. Das ist gestrichelt in Fig. 8 angedeutet.

Um diese Linearverschiebung der Schiebehülse 14 entgegen der Einsteckrichtung für den Gegenanschluss 9 vollziehen zu können, ist an die Schiebehülse 14 im Rahmen des Ausführungsbeispiels nach Fig. 8 eine Betätigungsstange 33 über ein Drehgelenk 34 angeschlossen. Die Betätigungsstange 33 wird von einem mit dem Außenhebel 3 zusammenwirkenden Betätigungshebel 35 verschoben. Der Betätigungshebel 35 und der Außenhebel 3 drehen sich um die gemeinsame Achse A.

Wenn nun der Außenhebel 3 in der durch einen Pfeil in Fig. 8 dargestellten Richtung gezogen wird, so bewegt sich die Schiebehülse 14 ebenfalls in Pfeilrichtung, und zwar bis die Sperrglieder 13 verriegelnd in die Nut 15 des Gegenanschlusses 9 überführt worden sind. Gleichzeitig fährt die Schiebehülse 14 gegen einen vorderen Anschlag 36. Bei dem beschriebenen Linearverstellvorgang der Schiebehülse 14 greift die Betätigungsstange 33 mit einem Zapfen 37 in ein Langloch 38 des Betätigungshebels 35 ein. Sobald die Schiebehülse 14 den Anschlag 36 erreicht hat und folglich der Gegenanschluss 9 mit Hilfe der auslassseitigen Verriegelungseinrichtung 5 am Gehäuse 2 verriegelt ist, werden sowohl die Betätigungsstange 33 als auch der Betätigungshebel 35 ebenfalls fixiert. Jetzt hat der Außenhebel 3 den zum Schwenkwinkel α₁ gehörigen (ersten) Betätigungsweg vollzogen.

Dadurch bricht eine zuvor kraftschlüssige Verbindung 39 zwischen dem Außenhebel und dem Betätigungshebel 35 auf. Wenn nun der Außenhebel 3 weiter gezogen wird (entsprechend dem Winkel α₂; zweiter Betätigungsweg), so verharrt die Schiebehülse 14 in ihrer Position und es wird im Anschluss an den ersten Betätigungsweg α₁ des Außenhebels 3 das Einlassventil 6 während des zweiten Betätigungsweges α₂ geöffnet, wie nachfolgend näher beschrieben wird.

Um das Einlassventil 6 zu öffnen, das im Detail in der Fig. 9 dargestellt ist, wird zuvor die Entlüftungseinrichtung 7 geschlossen, die lediglich angedeutet ist. Bei geschlossener Entlüftungseinrichtung 7 und geöffnetem Einlassventil 6 ist das Gas in der Lage, über die Einlassöffnung 20 durch den Hohlzylinder bzw. Ventilkolben 19 hindurch in die Verbindungsleitung 12 eintreten zu können, von wo aus es über das geöffnete Auslassventil 8 und den Gegenanschluss 9 schließlich in den Gastank gelangt.

Das Einlassventil 6 verfügt ausweislich der Fig. 9 über den beidseitig offenen Hohlkörper 19, der als beidseitig offener Hohlzylinder 19 ausgebildet ist. Der Hohlkörper bzw. Hohlzylinder 19 übernimmt die Funktion des Ventilkolbens in dem Einlassventil 6. Er verschließt bei geschlossenem Einlassventil 6 die Einlassbohrung bzw. Einlassöffnung 20, an welcher der Druck des zu übertragenden Mediums ansteht. In dieser geschlossenen Stellung ist die Entlüftungsbohrung 21 in der Lage, gegebenenfalls vorhandenes überschüssiges Gas oder Medium in den Vorratsbehälter zurückzuführen.

Um nun das Einlassventil 6 zu öffnen, ist es erforderlich, den Hohlkörper bzw. Hohlzylinder 19 in der Pfeilrichtung "Öffnen" nach rechts in der Fig. 9 linear zu verstellen. Diese Axialverstellung führt dazu, dass die Einlassbohrung 20 geöffnet wird, weil sich der Hohlzylinder 19 mit einem Kragen 40 von einem zugehörigen Dichtsitz 41 entfernt. In der Gegenrichtung "Schließen" ist die Einlassbohrung 20 dagegen von dem Kragen 40 blockiert. Das ist die Grundstellung des Einlassventils 6, weil eine in den Hohlkörper bzw. Hohlzylinder 19 ragende und sich an ihm sowie dem Gehäuse 2 abstützende Feder 42 dafür sorgt, dass der Hohlzylinder 19 diese Schließstellung durchgängig einnimmt.

Erst wenn ein Kolben, insbesondere Ringkolben 43, die in der Fig. 9 durch den Pfeil angedeutete Verstellung in Richtung "Öffnen" erfährt, weil ein zugehöriger Pneumatikzylinder 44 mit Druck beaufschlagt wird, wird der Hohlzylinder 19 entgegen der Schließrichtung geöffnet, so dass sich sein Kragen 40 vom Dichtsitz 41 entfernt und das zu übertragende Gas durch den Hohlzylinder 19 in der durch Pfeile angedeuteten Art und Weise strömen kann. Das Einlassventil 6 wird also pneumatisch betätigt, wobei für den Druckaufbau in dem Pneumatikzylinder 44 das zu übertragende Medium bzw. Gas selbst sorgt. Das wird nachfolgend noch näher erläutert.

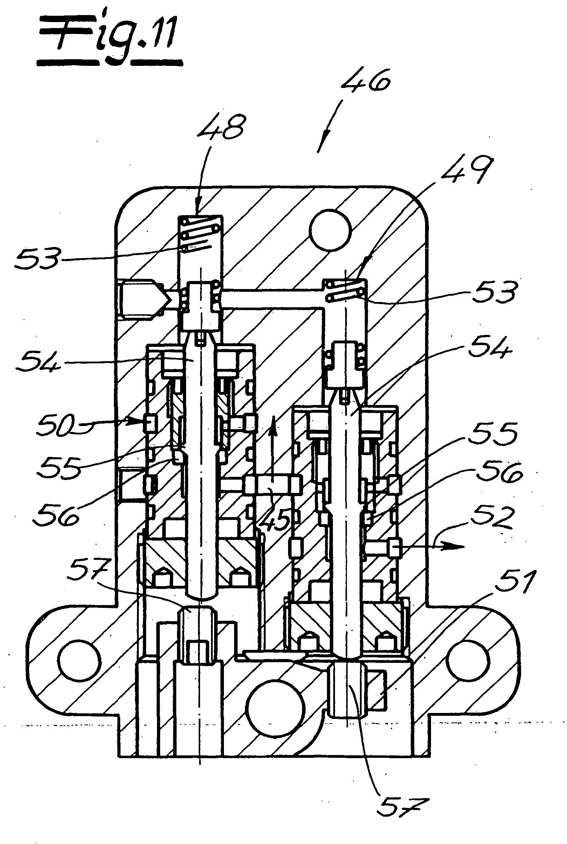

Der Pneumatikzylinder 44 steht mit einem Kanal 45 eines Steuerventilmoduls 46 in Verbindung (vgl. Fig. 10 und 11). Das Steuerventilmodul 46 sorgt dafür, dass der Pneumatikzylinder 44 wahlweise mit Druck beaufschlagt wird oder eine Entlüftung erfährt. Wenn der Pneumatikzylinder 44 entlüftet ist, nimmt der Ringkolben 43 die in Fig. 9 dargestellte Position ein, weil insofern die Feder 42 den Hohlzylinder 19 mit seinem Kragen 40 gegen den Dichtsitz 41 presst und demzufolge der an einer Kante 47 des Hohlzylinders 19 anliegende Ringkolben 43 ebenfalls in diese Grundstellung überführt wird.

Das Steuerventilmodul 46 verfügt über wechselweise mit Hilfe des Außenhebels 3 betätigbare Steuerventile 48, 49. Das Steuerventil 48 ist als Druckventil 48 ausgeführt und befindet sich in der Darstellung nach Fig. 11 in geschlossener Position. Demgegenüber ist das als Entlüftungsventil 49 ausgebildete Steuerventil 49 in offener Stellung. Dadurch wird der Pneumatikzylinder 44 über den beiden Steuerventilen 48, 49 gemeinsamen Kanal 45 entlüftet, so dass das Einlassventil 6 die geschlossene Position nach Fig. 9 einnimmt.

Das Druckventil 48 leitet in seiner offenen Stellung den an einer Zuleitung 50 anstehenden Druck des zu übertragenden Mediums weiter durch den gemeinsamen Kanal 45 zum Pneumatikzylinder 44, so dass im Anschluss daran das Einlassventil 6 geöffnet wird. In dieser Position ist das Entlüftungsventil 49 geschlossen. Für diesen wechselweisen Betrieb der beiden Steuerventile 48, 49 sorgt eine Betätigungswippe 51, die als Kipphebel 51 ausgeführt ist. Neben der Zuleitung 50 für das unter Druck stehende Medium ist das Steuerventilmodul 46 ergänzend mit einer Entlüftungsleitung 52 ausgerüstet.

Beide Steuerventile 48, 49 verfügen jeweils über eine Rückstellfeder 53, die dafür sorgt, dass sich das zugehörige Ventil 48, 49 in geschlossener Position befindet, solange nicht der Kipphebel 51 dafür sorgt, dass ein zugehöriger Ventilkolben 54 mechanisch geöffnet wird.

Der jeweilige Ventilkolben 54 verfügt über eine umlaufende Wulst 55, die in ihrer geschlossenen Stellung einen Dichtsitz 56 verschließt. Befindet sich der betreffende Ventilkolben 54 in seiner geschlossenen Position (vgl. das Druckventil 48 in Fig. 11) so liegt die Wulst 55 am Dichtsitz 56 an, weil die Rückstellfeder 53 hierfür sorgt. Das hat zur Folge, dass sich der an der Zuleitung 50 vorhandene Gasdruck nicht durch den Dichtsitz 56 an der Wulst 55 vorbei in den Kanal 45 und folglich den Pneumatikzylinder 44 entspannen kann.

Wenn dagegen der Kipphebel 51 mit seinen zugehörigen Betätigungsnasen 57 dafür sorgt, dass der Ventilkolben 54 des Druckventils 48 geöffnet wird und gleichzeitig der Ventilkolben 54 des Entlüftungsventils 49 eine Schließung erfährt, so kann der Druck des Gases über die Zuleitung 50 und das geöffnete Druckventil 48 sowie den Kanal 45 in den Pneumatikzylinder 44 eintreten und dort den Ringkolben 43 in Pfeilrichtung verschieben. Gleichzeitig wird der Hohlzylinder 19 geöffnet und das unter Druck stehende Medium strömt in Pfeilrichtung durch das Gehäuse 2 und schließlich den Gegenanschluss 9 in den zu füllenden Fahrzeugtank.

Die Betätigung des Kipphebels 51 bzw. der Betätigungswippe 51 erfolgt dabei mit Hilfe des Außenhebels 3, und zwar dann, wenn dieser Außenhebel 3 von dem Betätigungshebel 35 entkoppelt ist, weil die kraftschlüssige Verbindung 39 aufgebrochen wurde (d.h. nach Überstreichen des ersten Betätigungsweges; Winkel α₁). Dabei nimmt die Betätigungswippe 51 bzw. der Kipphebel 51 eine federbeaufschlagte Grundstellung ein, die in Fig. 11 dargestellt ist. In dieser Grundstellung ist der Pneumatikzylinder 44 entlüftet, weil das Entlüftungsventil 49 offen ist und gleichzeitig das Druckventil 48 seine geschlossene Stellung einnimmt. Als Folge des entlüfteten Pneumatikzylinders 44 ist das Einlassventil 6 geschlossen, weil hierfür die zugehörige Feder 42 sorgt.

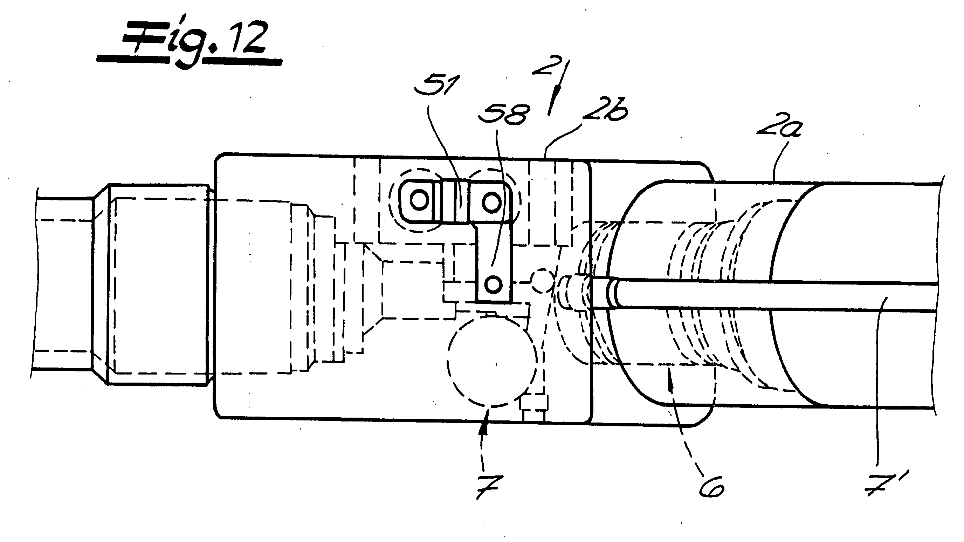

Im Einzelnen verfügt die Betätigungswippe bzw. der Kipphebel 51 über einen Ausleger 58, den man insbesondere in den Fig. 10 und 12 erkennt. An diesem Ausleger bzw. Betätigungsarm 58 greift - wie gesagt - der Außenhebel 3 an, und zwar gegen die Kraft einer lediglich angedeuteten Feder 59, die dafür sorgt, dass sich die Betätigungswippe bzw. der Kipphebel 51 ohne Beaufschlagung des Außenhebels 3 in der Position nach Fig. 11 befindet. Erst wenn der beschriebene erste Betätigungsweg zur Beaufschlagung der auslassseitigen Verriegelungseinrichtung 5 überstrichen worden ist, kommt der Außenhebel 3 mit dem Ausleger bzw. Betätigungsarm 58 in mechanische Verbindung und sorgt dafür, dass die Betätigungswippe bzw. der Kipphebel 51 gegen die Kraft der Feder 59 eine Verstellung dergestalt erfährt, dass das Druckventil 48 geöffnet wird und als Folge hiervon das Einlassventil 6 seine offene Position einnimmt.

## Patentansprüche

1. Schnellanschlusskupplung mit Betätigungseinrichtung (1) für die Übertragung eines gasförmigen und/oder flüssigen Mediums, insbesondere Betankungsarmatur zum Füllen von Fahrzeug-Gastanks, mit einem langgestreckten Gehäuse (2) mit Anschluss (4), welches in seinem Inneren wenigstens eine auslassseitige Verriegelungseinrichtung (5), ein Auslassventil (8), ein Einlassventil (6) und eine Entlüftungseinrichtung (7) aufweist, und mit einem schwenkbar an das Gehäuse (2) angelenkten Aussenhebel (3) zur Beaufschlagung der Verriegelungseinrichtung (5) und des Einlassventils (6), wobei der Aussenhebel (3) als im Wesentlichen in Gehäuselängsebene (E) bewegbarer Ziehgriff (3) ausgebildet ist,
**gekennzeichnet durch** ein Getriebe (30), welches die Schwenkbewegungen des Ziehgriffs (3) in der Gehäuselängsebene (E) in Linearbewegungen in im wesentlichen Gehäuselängsrichtung (L) umwandelt, wobei die Linearbewegungen einerseits auf das Einlassventil (6) und die Entlüftungseinrichtung (7) und andererseits auf die Verriegelungseinrichtung (5) übertragen werden.

2. Schnellanschlusskupplung nach Anspruch 1, **dadurch gekennzeichnet, dass** die Linearbewegungen mittels zweier Linearstellelemente (16, 22) auf das Einlassventil (5) und die Entlüftungseinrichtung (7) einerseits und auf die Verriegelungseinrichtung (5) andererseits übertragen werden.

3. Schnellanschlusskupplung nach Anspruch 2, **dadurch gekennzeichnet, dass** ein Exzenter (31) an das Getriebe (30) angeschlossen ist, wobei der Exzenter (31) auf eines der Linearstellelemente (16) arbeitet.

4. Schnellanschlusskupplung nach einem der Ansprüche 1 bis 3, **dadurch gekennzeichnet, dass** das Gehäuse (2) einen von der Hand eines Bedieners gemeinsam mit dem Ziehgriff (3) umgreifbaren Abschnitt (2a) aufweist, in welchem das Einlassventil (6) und die Entlüftungseinrichtung (7) angeordnet sind.

5. Schnellanschlusskupplung nach Anspruch 4, **dadurch gekennzeichnet, dass** das Gehäuse (2) einen weiteren, abgeknickten Abschnitt (2b) aufweist, in welchem die Verriegelungseinrichtung (5) angeordnet ist.

6. **Schnellanschlusskupplung nach den Ansprüchen 4 und 5, dadurch gekennzeichnet, dass** das Getriebe (30) im Übergangsbereich zwischen den Gehäuseabschnitten (2a, 2b) angeordnet ist.

7. Schnellanschlusskupplung nach einem der Ansprüche 1 bis 6, **dadurch gekennzeichnet, dass** dem Einlassventil (6) und der Entlüftungseinrichtung (7) ein linear verstellbarer Hohlkörper (19) zugeordnet ist, wobei der Hohlkörper (19) bei geschlossenem Einlassventil (6) eine Einlassbohrung (20) des Einlassventils (5) und bei geöffnetem Einlassventil (6) eine Entlüftungsbohrung (21) der Entlüftungseinrichtung (7) verschließt.

8. Schnellanschlusskupplung nach Anspruch 7, **dadurch gekennzeichnet, dass** das Getriebe (30) über ein Linearstellelement (22) auf den Hohlkörper (19) einwirkt.

9. Schnellanschlusskupplung nach einem der Ansprüche 1 bis 8, **dadurch gekennzeichnet, dass** der Aussenhebel (3) bei seinen Schwenkbewegungen in der Gehäuselängsebene (E) einen vorgegebenen Schwenkwinkel (α) gegenüber einer Gehäuselängsrichtung (L) überstreicht.

10. Schnellanschlusskupplung nach einem der Ansprüche 1 bis 9, **gekennzeichnet durch** einen Schutzbügel (24) für den Ziehgriff (3).

11. Schnellanschlusskupplung nach Anspruch 10, **gekennzeichnet durch** eine an dem Schutzbügel (24) angebrachte Klinke (23) zum Festhalten des Ziehgriffs (3).

## Claims

1. A quick-connection coupling with actuating device (1) for the transfer of a gaseous and/or liquid medium, in particular a refuelling fitting for filling vehicle gas tanks, comprising an elongate housing (2) with connection (4), which housing in its interior has at least an outlet-side locking device (5), an outlet valve (8), an inlet valve (6) and a venting device (7), and an outer lever (3) mounted pivotably to the housing (2) for acting on the locking device (5) and the inlet valve (6), wherein the outer lever (3) is in the form of a pull handle (3) movable substantially in the longitudinal plane (E) of the housing,
**characterised by** a transmission (30) which converts the pivotal movements of the pull handle (3) in the longitudinal plane (E) of the housing into linear movements in substantially the longitudinal direction (L) of the housing, wherein the linear movements are transmitted on the one hand to the inlet valve (6) and the venting device (7) and on the other hand to the locking device (5).

2. A quick-connection coupling according to claim 1 **characterised in that** the linear movements are transmitted by means of two linear control elements (16, 22) to the inlet valve (5) and the venting device (7) on the one hand and to the locking device (5) on the other hand.

3. A quick-connection coupling according to claim 2 **characterised in that** an eccentric (31) is connected to the transmission (30), wherein the eccentric (31) operates on one of the linear control elements (16).

4. A quick-connection coupling according to one of claims 1 to 3 **characterised in that** the housing (2) has a portion (2a) which can be embraced by the hand of an operator jointly with the pull handle (3) and in which the inlet valve (6) and the venting device (7) are arranged.

5. A quick-connection coupling according to claim 4 **characterised in that** the housing (2) has a further angled portion (2b) in which the locking device (5) is arranged.

6. A quick-connection coupling according to claims 4 and 5 **characterised in that** the transmission (30) is arranged in the transitional region between the housing portions (2a, 2b).

7. A quick-connection coupling according to one of claims 1 to 6 **characterised in that** a linearly displaceable hollow body (19) is associated with the inlet valve (6) and the venting device (7), wherein when the inlet valve (6) is closed the hollow body (19) closes an inlet bore (20) of the inlet valve (6) and when the inlet valve (6) is open the hollow body closes a venting bore (21) of the venting device (7).

8. A quick-connection coupling according to claim 7 **characterised in that** the transmission (30) acts on the hollow body (19) by way of a linear control element (22).

9. A quick-connection coupling according to one of claims 1 to 8 **characterised in that** in its pivotal movements in the longitudinal plane (E) of the housing the outer lever (3) passes through a predetermined pivotal angle (α) with respect to a longitudinal direction (L) of the housing.

10. A quick-connection coupling according to one of claims 1 to 9 **characterised by** a protective guard (24) for the pull handle (3).

11. A quick-connection coupling according to claim 10 **characterised by** a latch (23) mounted to the protective guard (24) for holding the pull handle (3) fast.

## Revendications

1. Dispositif d'accouplement à raccord rapide avec dispositif de manoeuvre (1) pour le transfert d'un milieu gazeux et/ou liquide, en particulier robinet de ravitaillement pour remplissage d'un réservoir de gaz de véhicule, avec un corps (2) allongé avec raccord (4) présentant à l'intérieur au moins un dispositif de verrouillage (5) côté refoulement, un clapet de refoulement (8), un clapet d'aspiration (6) et un dispositif de purge d'air (7), et avec un levier extérieur (3) appuyé de manière basculante sur le corps (2) pour la commande du dispositif de verrouillage (5) et du clapet d'aspiration (6), le levier extérieur (3) étant conformé en manette basculante (3), mobile, sensiblement dans le plan longitudinal du corps (E),
caractérisé en un engrenage (30) qui convertit les mouvements de basculement de la manette (3) dans le plan longitudinal du corps (E) en mouvements linéaires sensiblement dans le sens longitudinal du corps (L), les mouvements linéaires étant transférés sur le clapet d'aspiration (6) et sur le dispositif de purge d'air (7) d'une part et sur le dispositif de verrouillage (5) de l'autre.

2. Dispositif d'accouplement à raccord rapide selon la revendication 1, **caractérisé en ce que** les mouvements linéaires sont transférés au moyen de deux éléments linéaires (16, 22) sur le clapet d'aspiration (5) et sur le dispositif de purge d'air (7) d'une part, et sur le dispositif de verrouillage (5) de l'autre.

3. Dispositif d'accouplement à raccord rapide selon la revendication 2, **caractérisé en ce qu'**un excentrique (31) est raccordé à l'engrenage (30), l'excentrique (31) agissant sur l'un des éléments de réglage linéaires (16).

4. Dispositif d'accouplement à raccord rapide selon l'une quelconque des revendications 1 à 3, **caractérisé en ce que** le corps (2) présente une section (2a) que l'utilisateur peut prendre dans sa main conjointement avec la manette (3) et dans laquelle sont disposés le clapet d'aspiration (6) et le dispositif de purge d'air (7).

5. Dispositif d'accouplement à raccord rapide selon la revendication 4, **caractérisé en ce que** le corps (2) présente une autre section (2b) coudée, dans laquelle est logé un dispositif de verrouillage (5).

6. Dispositif d'accouplement à raccord rapide selon l'une quelconque des revendications 4 et 5, **caractérisé en ce que** l'engrenage (30) est disposé dans la zone de transition entre les sections du corps (2a, 2b).

7. Dispositif d'accouplement à raccord rapide selon l'une quelconque des revendications 1 à 6, **caractérisé en ce qu'**un corps creux (19) réglable linéairement est asservi au clapet d'aspiration (6) et au dispositif de purge d'air (7), le corps creux (19) verrouillant un orifice d'aspiration (20) du clapet d'aspiration (6) lorsque le clapet d'aspiration (6) est fermé et un orifice de purge d'air (21) du dispositif de purge d'air (7) lorsque le clapet d'aspiration (6) est ouvert.

8. Dispositif d'accouplement à raccord rapide selon la revendication 7, **caractérisé en ce que** l'engrenage (30) agit via un élément de réglage linéaire (22) sur le corps creux (19).

9. Dispositif d'accouplement à raccord rapide selon l'une quelconque des revendications 1 à 8, **caractérisé en ce que** lors de ses mouvements de basculement dans le plan longitudinal du corps (E), le levier extérieur (3) parcourt un angle de basculement prédéfini (α) par rapport au sens longitudinal du corps (L).

10. Dispositif d'accouplement à raccord rapide selon l'une quelconque des revendications 1 à 9, **caractérisé en** un étrier de protection (24) pour la manette (3).

11. Dispositif d'accouplement à raccord rapide selon la revendication 10, **caractérisé en** une languette (23) montée sur l'étrier de protection (24) pour bloquer la manette (3).
